# EUROPEAN PATENT APPLICATION

(11) **EP 4 715 230 A1**
(43) Date of publication of application: **25.03.2026**
(21) Application number: 25202672.9
(22) Date of filing: 17.09.2025
(51) Int. Cl.: F16C 17/02, F16C 23/04, F16C 27/02, F16C 35/02

(54) **FLEXIBLE BEARING FOR SELF-ALIGNING JOURNAL**

(30) Priority: 18.09.2024 US 202463696149 P
(71) Applicant: Eaton Intelligent Power Limited, D04 Y0C2 Dublin 4 (IE)
(72) Inventor: REINHARDT, Matthew, Dublin 4, D04 Y0C2 (IE); MACKEY, Cody, Dublin 4, D04 Y0C2 (IE); MARTIN-DYE, Simon, Dublin 4, D04 Y0C2 (IE); SCOTT, Douglas A., Dublin 4, D04 Y0C2 (IE)
(74) Representative: Epping - Hermann - Fischer

(57) **Abstract**

A rotary system includes a bearing arrangement disposed within a housing (e.g., a pressure plate housing of a variable displacement pump). The bearing arrangement supports a shaft that rotates within the housing. The bearing arrangement includes a bearing sealed to the housing and a journal insert that supports the shaft at a single location along a length of the journal insert. Part of the outer circumference of the bearing is removed at a particular axial and circumferential location to conform to the deflection of the journal insert during rotating of the shaft.

## Description

### CROSS-REFERENCE TO RELATED APPLICATIONS

This application claims the benefit of U.S. Provisional Application No. 63/696,149, filed September 18, 2024, the disclosure of which is hereby incorporated herein by reference in its entirety.

### BACKGROUND

The load carrying capacity of some conventional style journal bearings is limited by small deflections of a loaded shaft. A bearing assembly supports the shaft at one or more locations along the length of the shaft to provide adequate support of the shaft. However, deflections are unavoidable during operation of such a mechanical device. Controlling or limiting the amount of deflection is important because too much shaft deflection results in operational issues with the rotary machine.

In certain applications, e.g., rotary systems application such as a rotary pump, the drive shaft is rotated by a motor and transfers the rotary motion to the pump. U.S. Pat. No. 7,108,493 shows an example of such a rotary system. The pump rotor imparts energy to the fluid in a well-known manner and thereby increases fluid pressure between the pump inlet and outlet. Misalignment of the rotor relative to stationary portions of the rotary machine can lead to significant deviations of the rotor or shaft and consequently non-uniform load bearing.

Some conventional journal bearings are sized to a specified or rated load-carrying capacity of the pump which necessarily entails designing the pump assembly as if uniform load bearing were to be achieved. Other journal bearings can be self-aligning. For example, U.S. Patent No. 8,308,366 discloses a bearing arrangement including a self-aligning journal bearing for a rotary pump. Designers, of course, recognize that some imperfection or misalignment will exist and therefore purposefully accommodate or incorporate expected misalignment into the ratings for the pump.

### SUMMARY

A load capacity of a conventional or self-aligning journal bearing can be increased by allowing the bearing member to flex at a strategic region to conform to the deflection profile of a rotating member.

In accordance with certain aspects, a recess is formed in an outer surface of a bearing arrangement that enables part of a bearing member of the bearing arrangement to flex to conform to an axial profile of a journal insert of the bearing arrangement during rotating of the journal insert relative to the bearing arrangement. Enabling conformance between the axial profiles of the journal insert and the bearing arrangement balances the distribution of hydrodynamic pressure along the journal insert.

In certain implementations, the recess radially aligns with a self-alignment feature of the journal insert.

In certain implementations, the recess circumferentially aligns with a region of peak hydrodynamic pressure within the housing.

In certain implementations, the bearing arrangement is disposed within a pressure plate housing to support a shaft rotating within the pressure plate.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a perspective view of a cross-section of an example rotary system including a rotating shaft supported within a housing by first and second bearing portions;
FIG. 2 is a transverse cross-section of the rotary system of FIG. 1 taken through one of the bearing portions;
FIG. 3 is an axial cross-section of a portion of the rotary system of FIG. 1 taken along the 3-3 line of FIG. 2;
FIG. 4 is an axial cross-section of a portion of the rotary system of FIG. 1 taken along the 4-4 line of FIG. 2 with the shaft removed for clarity and axial ends of the journal insert shown deflected by the hydrodynamic pressure;
FIG. 5 is an axial cross-section of a portion of the rotary system of FIG. 1 taken along the 5-5 line of FIG. 2 when the shaft is not rotating relative to the housing;
FIG. 6 shows the hydrodynamic pressure acting on a thinned wall of the bearing while the shaft is rotating relative to the housing.

### DETAILED DESCRIPTION

Reference will now be made in detail to exemplary aspects of the present disclosure that are illustrated in the accompanying drawings. Wherever possible, the same reference numbers will be used throughout the drawings to refer to the same or like parts.

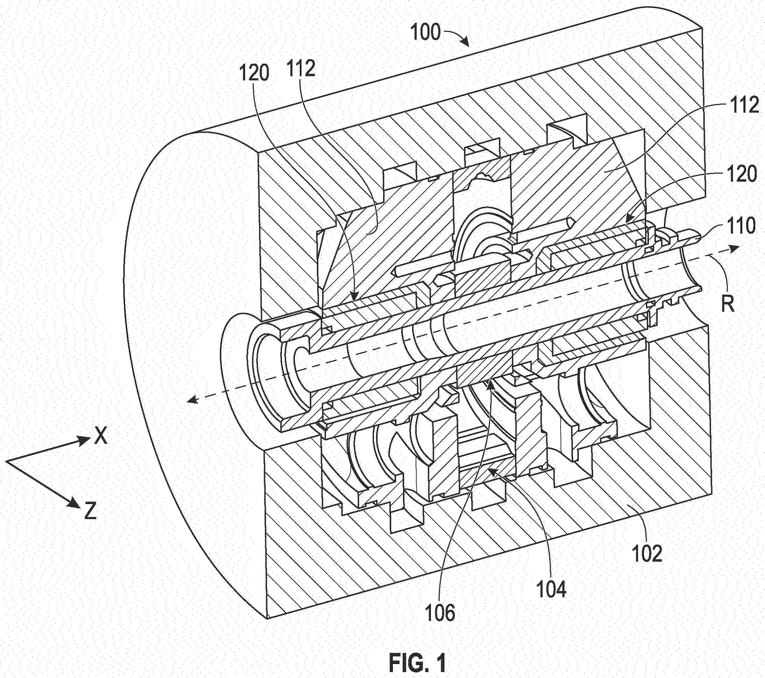

As shown in FIG. 1, a rotary machine 100, such as a variable displacement pump, includes a pump housing 102 having a pump chamber 104. First and second pressure plates 112 are supported in the pump housing 102. The pressure plates 112 include openings for providing inlet and outlet fluid to the pump chamber 104. Rotatably received in the pump chamber 104 is a rotor 106 secured to a shaft 110 for rotating the rotor 106 within the pump chamber 104. The shaft 110 rotates about a longitudinal or rotary axis R. A drive shaft may engage the shaft 110 to transfer torque (e.g., via a splined connection) from a prime mover (e.g., a motor). In some implementations, the shaft 110 is supported at one end in a bearing arrangement. In other implementations, however, the shaft 110 is supported by a split bearing arrangement including a first bearing portion 120 and a second bearing portion 120. In certain implementations, each bearing portion 120 is substantially identical.

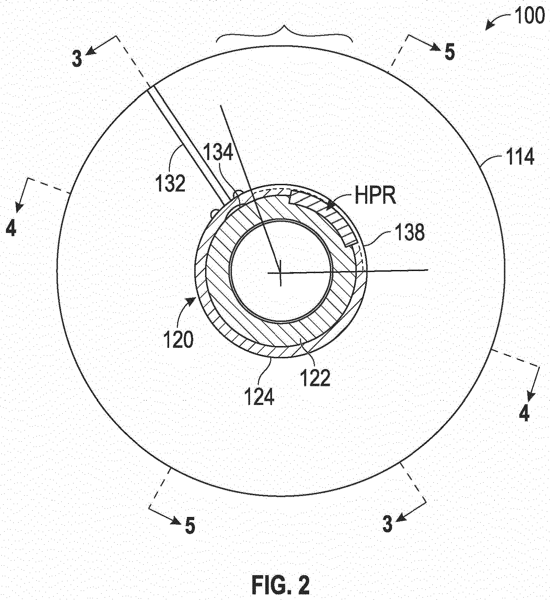

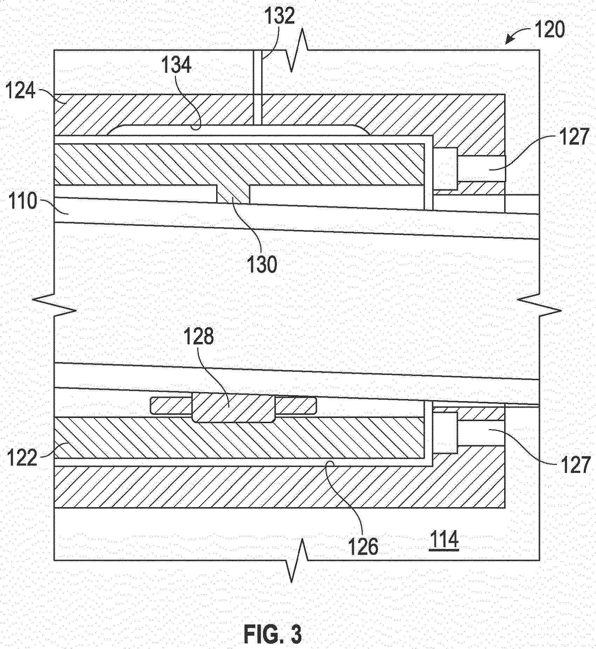

Referring to the figures in general, each bearing portion 120 includes a journal insert 122 received in a recess 126 of bearing member 124 (e.g., a leaded bronze bearing). The bearing member 124 is disposed within a housing 114 of a respective one of the pressure plates 112. In certain examples, the bearing member 124 is axially fixed within the pressure plate housing 114. In an example, the bearing member 124 threadably mounts to the pressure plate housing 114. In another example, the bearing member 124 is friction-fit within a recess of the pressure plate housing 114. In certain examples, the bearing member 124 may be fastened to the pressure plate housing 114 (e.g., see fastener recesses 127 in FIG. 3). In certain examples, an outer surface of the bearing member 124 seals to an inner surface of the pressure plate housing 114. In certain examples, a passage 132 (e.g., a high-pressure feed orifice) extends radially through the pressure plate housing 114 and the bearing member 124 (e.g., see FIGS. 2 and 3.

The journal insert 122 extends around the shaft 110. In certain examples, a connection/drive member or pin 128 is partially received in the journal insert 122 and partially received in the shaft 110 so that the components rotate together. The journal insert 122 rotates relative to the bearing member 124. In certain implementations, an inner surface of the recess 126 in each bearing member 124 has a close mating fit with the outer cylindrical surface of the journal insert 122. In certain examples, the inner surface of the bearing member 124 defines a recessed region 134 at the passage 132 (e.g., see FIG. 3).

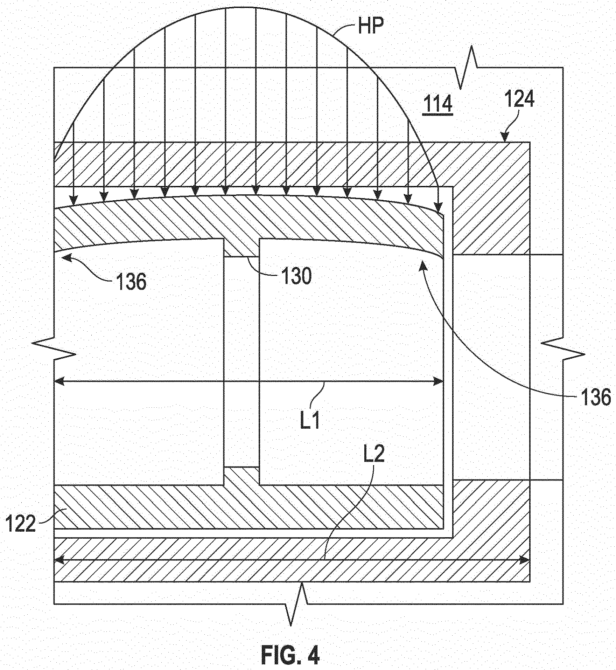

In certain implementations, the journal insert 122 includes a self-alignment feature 130 at an intermediate location along a length L1 (FIG. 4) of the journal insert 122. This self-alignment feature 130 serves as the sole contact region between the journal insert 122 and an outer surface of the shaft 110. Positioning this contact point at an intermediate location along the length L1 of the journal insert 122 accommodates relative misalignment between the shaft 110 and the journal insert 122. In some examples, the self-alignment feature 130 includes a radially inward protrusion at the intermediate location. In other examples, the self-alignment feature 130 is the peak of a dual-sided ramp or taper along the interior surface of the journal insert 122.

As shown in FIG. 2, during operation, hydrodynamic pressure is developed between the bearing member 124 and the journal insert 122. The hydrodynamic pressure peaks at a region HPR along an outer circumference of the bearing member 124. In certain examples, the peak region HPR of hydrodynamic pressure extends less than 90 degrees around a circumference of the bearing member 124. In certain examples, the peak region HPR of hydrodynamic pressure extends about 45 degrees along a circumference of the bearing member 124. In certain examples, the peak region HPR is circumferentially offset from the high-pressure orifice 132 extending through the pressure plate housing 114. In certain implementations, the net load on the first bearing portion 120 from the shaft 110 is applied in a net load direction NL. In certain examples, the net load direction NL is offset from the peak region HPR.

During operation, the shaft 110 is driven to rotate about the rotational axis R, thereby rotating the journal insert 122 relative to the bearing member 124. A hydrodynamic film pressure HP builds up between the journal insert 122 and the bearing member 124. In certain implementations, the bearing member 124 is supported against the hydrodynamic film pressure HP by the pressure plate housing 114 along at least some circumference of the bearing member 124. In the example shown in FIG. 4, the bearing member 124 is supported along an entire length L2 of the bearing member 124. Therefore, the bearing member 124 maintains its shape despite the pressure HP. Accordingly, the hydrodynamic pressure is shown in FIG. 4 as being applied against the journal insert 122.

In FIG. 4, the journal insert 122 is supported against the hydrodynamic film pressure HP by the shaft 110 at the self-alignment feature 130. Accordingly, the journal insert 122 maintains its shape in the region of the self-alignment feature 130. However, axial ends 136 of the journal insert 122 are radially offset from the shaft 110 (e.g., see FIG. 3) and, hence, are unsupported against the pressure HP. Accordingly, the axial ends 136 of the journal insert 122 deflect radially inwardly when exposed to the hydrodynamic film pressure HP (e.g., see FIG. 4). Such deflection may reduce the bearing load capacity of the journal insert 122.

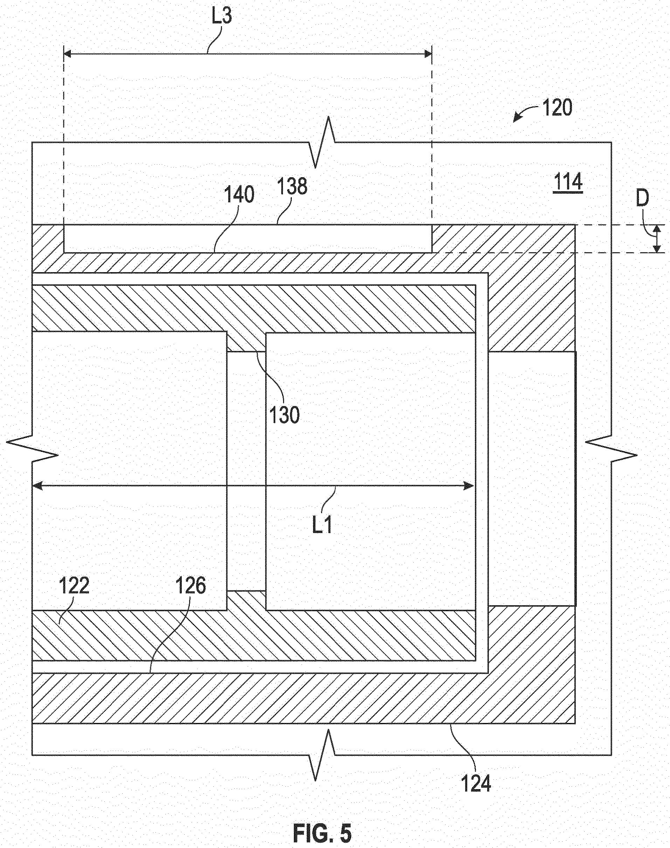

In accordance with certain aspects of the disclosure, a recess 138 may be defined in an outer surface of the bearing member 124 at least at the region of peak hydrodynamic pressure HPR (e.g., see FIGS. 2 and 5). The recess 138 is axially offset from axial ends of the bearing member 124 so that the axial ends of the bearing member 124 still seal against the inner surface of the pressure plate housing 114. In certain implementations, the recess 138 extends over less than a full circumference of the bearing member 124. In certain implementations, the recess 138 extends circumferentially beyond the peak pressure region HPR (e.g., see FIG. 2). In certain examples, the recess 138 is circumferentially offset from the passage 132.

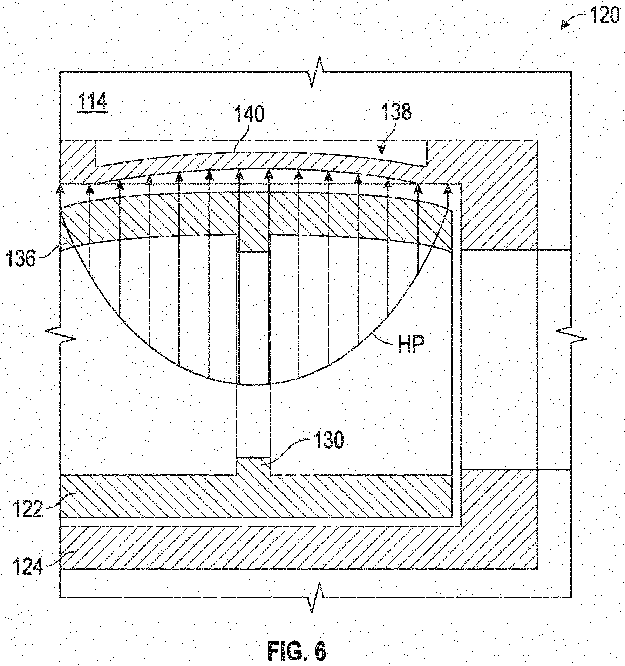

As shown in FIGS. 5 and 6, the recess 138 leads to a thinned wall 140 of the bearing member 124. The thinned wall 140 extends along at least part of the length L1 of the journal insert 122. In certain examples, the thinned wall 140 extends along a majority of the length of the journal insert 122. The thinned wall 140 of the bearing member 124 is sufficiently thin to deflect under the hydrodynamic film pressure HP. In the example shown in FIG. 5, the thinned wall 140 deflects away from the journal insert 122 and into the recess 138.

In certain implementations, a depth D of the recess 138 leaves a sufficient thickness of the thinned wall 140 to enable the thinned wall 140 to deflect without breaking. In certain implementations, a length L3 of the recess 138 is sufficient to allow the deflection of the thinned wall 140 to conform to the deflection of the journal insert 122 (e.g., see FIG. 6). In certain examples, a radial distance between the thinned wall 140 and the outer surface of the journal insert 122 may be consistent or near consistent along the length L3 of the recess 138. In an example, the thinned wall 140 may bow away from the journal insert 122 so that the radial distance between the thinned wall 140 and the journal insert 122 at the location of the self-alignment feature 130 is the same or about the same as the radial distance between the inner surface of the bearing member 124 and the outer surface of the journal insert 122 at the axial ends of the journal insert 122.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

## Claims

1. A rotary system comprising:
a housing;
a bearing disposed within an interior of the housing, the bearing including an annular wall extending along a length between first and second axial ends to define an interior cavity, the annular wall defining an outwardly facing recess at a first intermediate location along the length of the bearing, the recess extending along a portion of a circumference of the annular wall; and
a journal insert disposed within the bearing and being configured to rotate relative to the bearing, the journal insert being thicker at a second intermediate location along a length of the journal insert than at axial ends of the journal insert.

2. The rotary system of claim 1, wherein the second intermediate location radially aligns with the first intermediate location.

3. The rotary system of claim 1 or claim 2, wherein the recess extends axially beyond the second intermediate location.

4. The rotary system of any of claims 1-3, wherein the recess is disposed at a circumferential location of the bearing that aligns with a region of peak hydrodynamic pressure of the rotary system.

5. The rotary system of any of claims 1-4, further comprising a shaft extending through the housing, the shaft being rotatably fixed to the journal insert to rotate in unison with the journal insert.

6. The rotary system of claim 5, wherein the shaft contacts the journal insert at the second intermediate location of the journal insert.

7. A rotary system comprising:
a housing;
a shaft extending through the housing, the shaft being rotatable relative to the housing;
a bearing arrangement interposed between the shaft and the housing, the bearing arrangement including:
a journal insert disposed about the shaft and configured to rotate in unison with the shaft, the journal insert including a self-aligning protrusion at which the journal insert contacts the shaft, the self-aligning protrusion being disposed at an intermediate location along a length of the journal insert; and
a bearing sealed to the housing, the bearing being interposed between the journal insert and the housing, the bearing having an inner surface facing radially inwardly towards the journal sleeve and an outer surface facing radially outwardly towards the housing, the bearing defining a recess in the outer surface that radially aligns with the self-aligning protrusion of the journal insert.

8. The rotary system of claim 7, wherein the recess leads to a thinned wall configured to bow radially outwardly into the recess during rotation of the shaft.

9. The rotary system of claim 8, wherein the thinned wall extends parallel with the journal insert when the shaft and journal insert are not rotating.

10. The rotary system of claim 8, wherein the thinned wall conforms to a profile of the journal insert when the shaft and journal insert are rotating relative to the bearing.

11. The rotary system of claim 7, wherein the recess extends over only a portion of a circumference of the bearing.

12. The rotary system of claim 7, wherein the housing and the bearing cooperate to define a passage that is offset from the recess.

13. A method of operating a variable displacement pump, the method comprising:
rotating a shaft arrangement relative to a bearing, the shaft arrangement including a shaft and a journal insert that rotate together in unison;
allowing axial ends of the journal insert to deflect radially inwardly while an intermediate location of the journal insert is supported against inward radial deflection through contact with the shaft; and
bowing out a thinned surface of a bearing at the intermediate location of the journal insert so that a radial gap between the axial ends of the journal insert and the bearing is about the same as a radial gap between the journal insert and the bear at the intermediate location of the journal insert.

14. The method of claim 13, further comprising:
ceasing rotation of the shaft arrangement;
allowing the thinned wall portion of the bearing to return to an undeflected configuration to match an undeflected configuration of the journal insert.

15. The method of claim 13, further comprising press-fitting the bearing into a housing so that axial ends of the bearing seal against the housing.
